(19) Europäisches Patentamt
European Patent Office
Office européen des brevets

(11) **EP 3 080 883 B1**

(12) **FASCICULE DE BREVET EUROPEEN**

(45) Date de publication et mention
de la délivrance du brevet:
**03.02.2021 Bulletin 2021/05**

(21) Numéro de dépôt: **14809033.5**

(22) Date de dépôt: **09.12.2014**

(51) Int Cl.:
*H02H 1/00* (2006.01)          *H01C 7/06* (2006.01)
*H02H 3/02* (2006.01)          *H01C 1/014* (2006.01)

(86) Numéro de dépôt international:
**PCT/EP2014/076994**

(87) Numéro de publication internationale:
**WO 2015/086571 (18.06.2015 Gazette 2015/24)**

(54) **DISPOSITIF DE COURT-CIRCUITAGE D'UNE INSTALLATION ÉLECTRIQUE ET SYSTÈME D'EXTINCTION D'UN ARC ÉLECTRIQUE SUSCEPTIBLE D'APPARAITRE DANS UNE TELLE INSTALLATION**

KURZSCHLIESSER EINER ELEKTRISCHEN ANLAGE UND SYSTEM ZUM LÖSCHEN ETWAIGER LICHTBÖGEN IN EINER DERARTIGEN ANLAGE

SHORT-CIRCUITING DEVICE OF AN ELECTRICAL INSTALLATION AND SYSTEM FOR EXTINGUISHING AN ELECTRICAL ARC THAT MAY APPEAR IN SUCH AN INSTALLATION.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2013 FR 1362340**

(43) Date de publication de la demande:
**19.10.2016 Bulletin 2016/42**

(73) Titulaire: **Schneider Electric Industries SAS**
**92500 Rueil-Malmaison (FR)**

(72) Inventeurs:
• **RIVAL, Marc**
**38050 GRENOBLE Cedex 09 (FR)**
• **GIRAUD, Denis**
**38050 GRENOBLE Cedex 09 (FR)**
• **ROTA, Daniel**
**38050 GRENOBLE Cedex 09 (FR)**

(74) Mandataire: **Lavoix**
**62, rue de Bonnel**
**69448 Lyon Cedex 03 (FR)**

(56) Documents cités:
**DE-A1-102009 031 647     US-A- 4 858 054**
**US-B1- 6 538 554**

• **DETLEF MIETKE: "Temperaturkoeffizient einiger Leiterwerkstoffe", INTERNET CITATION, 30 septembre 2014 (2014-09-30), XP007922854, Extrait de l'Internet: URL:http://elektroniktutor.oszkim.de/baute ilkunde/tempkoef.html [extrait le 2014-10-07]**

**Description**

La présente invention concerne un dispositif de court-circuitage d'une installation électrique et un système d'extinction d'un arc électrique susceptible d'apparaitre dans une telle installation.

Dans le domaine de la protection d'une installation électrique, un enjeu persistant est de protéger l'installation électrique contre un arc électrique susceptible d'apparaitre suite à un défaut interne à l'installation. L'arc électrique se produit généralement entre des conducteurs de phase de l'installation.

L'arc électrique s'accompagne d'une libération d'une grande quantité d'énergie en un temps très bref. L'énergie est libérée notamment sous forme de chaleur et sous forme d'une explosion génératrice d'une onde de choc dans l'air. Ainsi, l'apparition de l'arc électrique est à la fois destructrice pour l'installation et dangereuse pour des personnes se trouvant à proximité.

Afin de protéger l'installation électrique et les personnes se trouvant à proximité, l'objectif principal est d'éliminer rapidement cet arc, c'est-à-dire par exemple, en moins de 2 millisecondes (ms). Il est ainsi connu d'utiliser un dispositif de court-circuitage permettant de créer un court-circuit en amont de l'arc électrique, par rapport à une source d'alimentation en énergie électrique de l'installation. Le dispositif de court-circuitage est également positionné en aval d'un disjoncteur reliant la source d'alimentation et les conducteurs électriques de l'installation. Ainsi, lors de la détection d'un arc électrique, le dispositif de court-circuitage court-circuite les conducteurs électriques, un courant électrique correspondant à l'arc électrique traverse alors le dispositif de court-circuitage, et l'arc électrique disparait. Cependant, cette opération de court-circuitage entraine la circulation d'un courant de court-circuit dans une partie de l'installation comprise entre le dispositif de court-circuitage et la source d'alimentation, jusqu'à ce que le disjoncteur s'ouvre. Le courant de court-circuit entraine d'importants efforts qui s'appliquent sur cette partie de l'installation jusqu'à l'ouverture du disjoncteur, réduisant ainsi la durée de vie de l'installation.

Afin de minimiser les efforts subis par l'installation électrique, lorsque l'arc électrique apparait et que le dispositif de court-circuitage établit un court-circuit dans l'installation, il est connu du document DE-A-10 931 647 de connecter un dispositif limiteur de courant entre le dispositif de court-circuitage et les conducteurs électriques. Un tel dispositif limiteur de courant est assimilable à des interrupteurs maintenus en position fermée et qui s'ouvrent, suite à la détection de l'arc électrique, seulement lorsque l'arc électrique est passé dans le dispositif de court-circuitage et a disparu, c'est-à-dire lorsqu'une tension mesurée sur les conducteurs électriques est inférieure à un seuil prédéterminé.

Cependant, une telle solution est complexe à mettre en œuvre et tant que la tension mesurée au niveau des conducteurs électriques est supérieure au seuil prédéterminé, des efforts importants s'appliquent à l'installation. Ainsi, un tel dispositif ne permet pas de réduire efficacement les efforts appliqués à l'installation, et l'installation subit donc à certains moments des efforts importants qui entrainent son vieillissement et sa détérioration.

Le document US 6538554 B1 décrit un élément résistif conçu pour être employé dans la domaine de grande puissance dans une large plage de température.

Le but de l'invention est donc de proposer un dispositif de court-circuitage permettant de réaliser une extinction de l'arc électrique très rapidement, tout en limitant les efforts subis par l'installation suite au court-circuitage de l'installation.

A cet effet, l'invention concerne un dispositif de court-circuitage d'une installation électrique comportant au moins deux conducteurs électriques, le dispositif comprenant au moins deux bornes de connexion, chacune étant propre à être reliée à un conducteur électrique respectif, un bloc électromécanique propre à établir un court-circuit entre les bornes de connexion, au moins un élément résistif propre à connecter l'une des bornes de connexion au conducteur électrique correspondant, le ou chaque élément résistif comprenant une première extrémité de connexion connectée à la borne de connexion correspondante et une deuxième extrémité de connexion propre à être connectée au conducteur électrique correspondant. Conformément à l'invention, l'élément résistif présente une impédance, et la variation de la valeur de l'impédance est inférieure à 1 m$\Omega$ pour une température de l'élément résistif comprise entre 0°C et 200°C.

Grâce à l'invention, le ou les éléments résistifs permettent de réduire fortement les efforts subis par l'installation tout en permettant l'extinction de l'arc électrique. En effet le ou les éléments résistifs permettent de diminuer la valeur crête, ainsi que la valeur moyenne, du courant circulant dans les conducteurs électriques. Plus précisément, au moment où le bloc électromécanique établit un court-circuit entre les bornes de connexion, et donc entre les conducteurs électriques, les efforts subis par l'installation sont généralement très importants, et l'utilisation du ou des éléments résistifs permet de limiter le courant de court-circuit circulant sur les conducteurs électriques, afin de limiter les efforts subis par l'installation, sans pour autant augmenter significativement le temps d'extinction de l'arc électrique.

Selon d'autres aspects avantageux de l'invention, le dispositif de court-circuitage comprend une ou plusieurs des caractéristiques suivantes, prises isolément ou suivant toutes les combinaisons techniquement admissibles :

- la valeur de l'impédance de l'élément résistif est comprise entre 0,3 m$\Omega$ et 1 m$\Omega$, de préférence entre 0,5 m$\Omega$ et 0,6 m$\Omega$, pour une température de l'élément résistif comprise entre 0°C et 100°C,
- le bloc électromécanique comprend un organe mobile propre à commuter entre une position de repos dans laquelle les bornes de connexion sont électriquement isolées les unes des autres, et une position de court-circuit dans laquelle les bornes de connexion sont connectées entre elles,

- le dispositif comprend plusieurs éléments résistifs, chaque borne de connexion étant connectée à la première extrémité de connexion d'un élément résistif respectif, alors que les éléments résistifs sont isolés électriquement les uns des autres,

- le ou chaque élément résistif est en inox,

- le ou chaque élément résistif comprend une arête reliant la première extrémité de connexion et la deuxième extrémité de connexion, alors que le ou chaque élément résistif présente une section, perpendiculairement à l'arête correspondante, supérieure ou égale à 400 mm$^2$,

- au moins une borne de connexion est décalée d'une hauteur de surélévation par rapport à l'autre ou aux autres bornes de connexion, la hauteur de surélévation étant comprise entre 2 cm et 4 cm,

- le ou chaque élément résistif est en forme de boustrophédon.

L'invention a également pour objet un système d'extinction d'un arc électrique susceptible d'apparaître dans une installation électrique, l'installation comprenant au moins deux conducteurs électriques, le système comprenant, au moins un appareil de détection de l'arc électrique sur chaque conducteur, au moins un disjoncteur d'isolation électrique connecté aux conducteurs électriques entre l'installation électrique et une source d'alimentation de cette installation électrique, un dispositif de court-circuitage connecté aux conducteurs électriques, une unité électronique de commande du dispositif de court-circuitage, propre à commander le dispositif de court-circuitage dans un état d'établissement d'un court-circuit entre les conducteurs électriques lorsque l'arc électrique est détecté par l'appareil de détection et un organe de déclenchement du ou des disjoncteurs électriques lorsque l'arc électrique est détecté par l'appareil de détection. Conformément à l'invention, le dispositif de court-circuitage est tel que décrit ci-dessus.

Selon un autre aspect avantageux du système d'extinction, le dispositif de court-circuitage est positionné en aval du ou des disjoncteurs d'isolation électrique par rapport à la source d'alimentation électrique.

L'invention sera mieux comprise et d'autres avantages de celle-ci apparaitront plus clairement à la lumière de la description qui va suivre, donnée uniquement à titre d'exemple non limitatif, et faite en se référant aux dessins sur lesquels :

- la figure 1 est une représentation schématique d'une installation électrique comprenant trois conducteurs électriques, et équipée d'un système d'extinction d'un arc électrique conforme à un premier mode de réalisation de l'invention, le système d'extinction comprenant un dispositif de court-circuitage électrique ;

- la figure 2 est une vue en perspective du dispositif de court-circuitage de la figure 1 ;

- la figure 3 est un ensemble de trois courbes représentant un courant circulant dans chacun des conducteurs électriques de la figure 1, lors de l'établissement, par le dispositif de court-circuitage, d'un court-circuit entre les conducteurs électriques ;

- la figure 4 est une courbe représentant un effort subi par l'un des conducteurs électrique de la figure 1, lors de l'établissement, par le dispositif de court-circuitage, d'un court-circuit entre les conducteurs électriques ;

- la figure 5 est une représentation analogue à celle de la figure 1 selon un deuxième mode de réalisation de l'invention ;

- la figure 6 est une vue analogue à celle de la figure 2 selon un troisième mode de réalisation de l'invention ;

- la figure 7 est un ensemble de trois courbes analogue à celui de la figure 3, pour une installation électrique équipée d'un système d'extinction de l'état de la technique ; et

- la figure 8 est une courbe analogue à celle de la figure 4, pour une installation électrique équipée d'un système d'extinction de l'état de la technique.

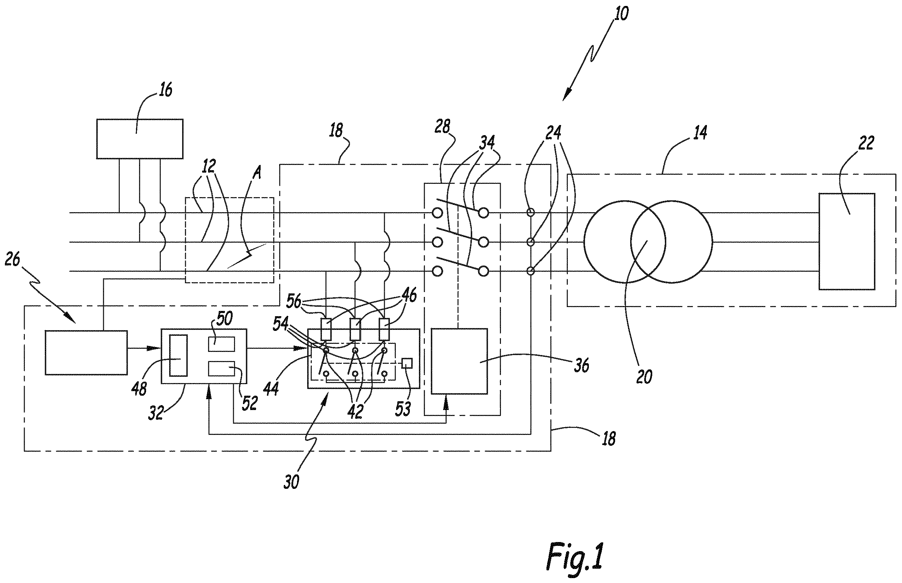

Sur la figure 1, une installation électrique triphasée 10 comprend trois conducteurs électriques 12, chacun correspondant à une phase, les conducteurs 12 étant raccordés à une source d'alimentation triphasée 14.

Les conducteurs 12 sont connectés à une charge électrique 16 qu'ils alimentent en énergie électrique et à un système 18 d'extinction d'un arc électrique A, l'arc A étant susceptible d'apparaitre dans l'installation 10 entre les conducteurs électriques 12.

La source d'alimentation 14 comprend un transformateur électrique 20 destiné à être connecté à un réseau électrique 22.

Le système d'extinction 18 comprend un capteur de courant 24 pour chaque conducteur 12 et un capteur optique 26 propre à détecter un flash ou un éclat de lumière produit par l'arc électrique A lorsqu'il apparait entre les conducteurs électriques 12. Le système d'extinction 18 comporte un disjoncteur triphasé 28 disposé entre la source de puissance 14 et la charge 16, et propre à isoler électriquement la source de puissance 14 par rapport à l'installation 10 en cas de défaut électrique.

Le système d'extinction 18 comprend également un dispositif 30 de court-circuitage des conducteurs électriques 12 et une unité de traitement 32 propre à piloter le dispositif de court-circuitage 30 et le disjoncteur 28, et à traiter des données transmises par les capteurs de courant 24 et le capteur optique 26.

Le transformateur électrique 20 est propre à transformer le courant électrique délivré par le réseau 22 et présentant une première tension alternative, en un autre courant électrique présentant une deuxième tension alternative.

Le réseau électrique 22 est un réseau alternatif, tel qu'un réseau triphasé. Le réseau électrique 22 est, de préférence, un réseau moyenne tension, c'est-à-dire un réseau dont la tension est supérieure à 1000 volts et inférieure à 50 000 volts. La première tension alternative est alors une moyenne tension et la deuxième tension alternative est par exemple une basse tension, c'est-à-dire une tension inférieure à 1000 volts. Le transformateur électrique 22 divise ainsi l'installation électrique triphasée 10 en un côté moyenne tension et un côté basse tension.

Les capteurs de courant 24 sont positionnés autour de chaque conducteur électrique 12 et sont disposés, entre la source d'alimentation 14, et à la fois le dispositif de court-circuitage 30 et le disjoncteur 28. Chaque capteur de courant 24 comporte par exemple un tore de Rogowski disposé autour du conducteur électrique 12 correspondant.

Le capteur optique 26 est propre à détecter un flash ou un éclat de lumière produit par l'apparition de l'arc électrique A sur les conducteurs 12, sachant que l'arc électrique A apparait en aval du dispositif de court-circuitage 30 par rapport à la source d'alimentation 14 située en amont. Le capteur optique 26 est, par exemple, tel que décrit dans la demande EP-A1-0575932 en page 3, lignes 18 à 23 et en page 5, lignes 9 à 18.

Le disjoncteur triphasé 28 est propre à isoler électriquement la source d'alimentation 14 de l'installation 10 en coupant l'alimentation des conducteurs 12. Comme représenté sur la figure 1, le disjoncteur 28 est assimilable à trois interrupteurs 34 connectés sur les conducteurs 12 et à un actionneur 36 de commande des interrupteurs 34. Le disjoncteur 28 est mobile entre deux positions, à savoir une position ouverte dans laquelle les interrupteurs 34 sont en position ouverte et interrompent la circulation du courant à travers les conducteurs électriques 12, et une position fermée dans laquelle les interrupteurs 34 sont en position fermée et laissent passer le courant à travers les conducteurs électriques 12.

Le dispositif de court-circuitage 30 comprend trois bornes de connexion 42, chacune étant propre à être reliée à un conducteur électrique 12 respectif, et un bloc électromécanique 44 parallélépipédique propre à établir un court-circuit entre les bornes de connexion 42.

Le dispositif de court-circuitage 30 comprend également, pour chaque borne de connexion 42, un élément résistif 46 propre à connecter la borne de connexion 42 correspondante au conducteur électrique 12 correspondant.

On note X, un axe longitudinal du bloc électromécanique 44 et du dispositif de court-circuitage 30.

On note Y, un axe transversal du bloc électromécanique 44 et du dispositif de court circuit 30, perpendiculaire à l'axe longitudinal X, et suivant lequel chaque élément résistif 46 relie la borne de connexion 42 correspondante et le conducteur électrique 12 correspondant.

On note Z, un axe vertical perpendiculaire à l'axe longitudinale X et à l'axe transversal Y.

L'unité de traitement 32 comprend un logiciel 48 de détection de l'arc électrique A, une unité électronique 50 de commande du dispositif de court-circuitage 30, et plus spécifiquement du bloc électromécanique 44, et un organe 52 de déclenchement de l'ouverture du disjoncteur électrique triphasé 28.

L'actionneur 36 est propre à être commandé via l'organe de déclenchement 52 afin de déplacer les interrupteurs 34 dans leur position ouverte, pour laquelle la circulation du courant à travers les conducteurs électriques 12 est interrompue.

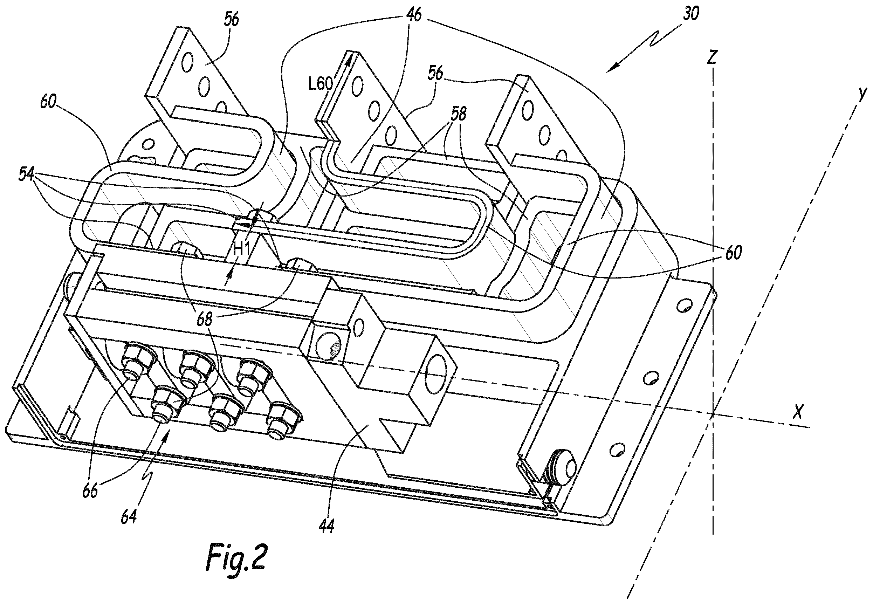

Chaque borne de connexion 42 est propre à être reliée via l'élément résistif 46 correspondant au conducteur électrique 12 correspondant. A la figure 2, l'une des bornes de connexion 42 est décalée d'une hauteur de surélévation H1 par rapport aux autres bornes de connexion 42. La hauteur de surélévation H1 est mesurée suivant l'axe transversal Y et comprise entre 2cm et 4cm.

Le bloc électromécanique 44 est propre à établir un court-circuit entre les bornes de connexion 42 en les reliant les unes aux autres. Le bloc électromécanique 44 comprend un organe 53 mobile, suivant l'axe longitudinal X, entre une position de repos dans laquelle les bornes de connexion 42 sont isolées électriquement les unes des autres et une position de court-circuit dans laquelle les bornes de connexion 42 sont connectées électriquement entre elles.

Le bloc électromécanique 44 est de préférence conforme à celui décrit dans la demande de brevet FR-A1-2 980 301 de la page 8, ligne 15 à la page 11, ligne 31. Le bloc électromécanique 44 s'étend selon l'axe longitudinal X.

Chaque élément résistif 46 est adapté pour connecter la borne de connexion 42 correspondante au conducteur électrique 12 correspondant. Plus précisément, chaque élément résistif 46 comprend une première extrémité de connexion 54 connectée à la borne de connexion 42 correspondante et une deuxième extrémité de connexion 56 propre à être connectée au conducteur électrique 12 correspondant. Comme représenté à la figure 2, les éléments résistifs 46 sont isolés électriquement les uns des autres par des éléments diélectriques 58, les éléments diélectriques 58 étant disposés entre deux éléments résistifs 46 successifs. Les éléments résistifs 46 sont ainsi isolés électriquement les uns des autres, lorsque l'organe mobile 53 est en position de repos et connectés électriquement les uns aux autres, lorsque l'organe mobile 53 est en position de court-circuit.

Chaque élément résistif 46 présente une impédance dont la variation de la valeur est inférieure à 1 m$\Omega$ pour une température de l'élément résistif 46 comprise entre 0°C et 200°C.

La valeur de l'impédance de chaque élément résistif 46 est par exemple comprise entre 0,3 m$\Omega$ et 1 m$\Omega$, de préférence comprise entre 0,5 m$\Omega$ et 0,6 m$\Omega$, pour une température de l'élément résistif 46 comprise entre 0°C et 100°C.

A la figure 2, chaque élément résistif 46 est en forme de boustrophédon. Les éléments résistifs 46 sont en inox.

Chaque élément résistif 46 comprend une arête 60 qui s'étend entre la première extrémité de connexion 54 et la deuxième extrémité de connexion 56 sur une longueur curviligne L60 supérieure à 200 mm. De même, la section des éléments résistifs 46, mesurée perpendiculairement à l'arête 60, est supérieure à 400mm².

Chaque élément résistif 46 est, par exemple, en inox AISI 316L dont la résistivité à 20°C est égale à 75 μΩ.cm. Chaque élément résistif 46 a, par exemple, sa longueur curviligne L60 égale à 340 mm et sa section, mesurée perpendiculairement à l'arête 60, égale à 500 mm². Les éléments résistifs 46 sont dimensionnés afin que leur température maximale soit inférieure à 500°C pour un courant les traversant égal à 100 kiloAmpères (kA) pendant 50 millisecondes. Ainsi, chaque élément résistif 46 a un volume V1 de préférence supérieur à 80 cm³ (80 000 mm³).

En variante, le matériau constituant les éléments résistifs 46 est différent de l'inox, et les caractéristiques de ce matériau et les dimensions des éléments résistifs 46 sont telles que chaque élément résistif 46 présente une impédance dont la valeur est comprise entre 0,3 mΩ et 1 mΩ, de préférence comprise entre 0,5 mΩ et 0,6 mΩ, pour une température de l'élément résistif 46 comprise entre 0°C et 100°C. Dans cette variante, le matériau constituant les éléments résistifs est par exemple un alliage nickel-chrome ou un alliage fer-chrome à haute résistivité électrique.

Chaque élément résistif 46 est relié à la borne de connexion 42 correspondante via deux liaisons vissées 64.

Le logiciel de détection 48 est propre, en fonction des données mesurées par le capteur optique 26 et les capteurs de courant 24, à détecter l'apparition de l'arc électrique A entre les conducteurs électriques 12.

Le logiciel de détection 48, le capteur de courant 24 et le capteur optique 26 sont assimilables à un appareil électrique de détection de l'arc électrique A.

L'unité de commande 50 est propre à commander le dispositif de court-circuitage 30 dans un état d'établissement d'un court-circuit entre les conducteurs électriques 12, lorsque l'arc électrique A est détecté par le logiciel de détection 48. Plus précisément, l'unité électronique de commande 50 est propre à agir sur le bloc électromécanique 44 de manière à commander le déplacement de l'organe mobile 53 vers sa position de court-circuit lorsque l'arc électrique A est détecté.

L'organe de déclenchement 52 est propre à commander l'actionneur 36 pour le déplacement du disjoncteur 28 en position ouverte lorsque l'arc électrique A est détecté par le logiciel de détection 48.

Le temps de déplacement du disjoncteur 28 vers sa position ouverte, suite à la détection de l'arc électrique A par le logiciel de détection 48, est généralement inférieur à 50 ms. Ainsi, le temps d'élimination du court-circuit créé par le dispositif de court-circuitage 30 est inférieur à 50 ms pour l'installation 10.Chaque première extrémité de connexion 54 comprend, suivant l'axe transversal Y, deux orifices traversants, non visibles sur les différentes figures.

Chaque liaison vissée 64 comprend une tige filetée traversante 66 positionnée, suivant l'axe transversal Y, à travers le bloc électromécanique 44 et l'orifice traversant correspondant et deux boulons 68 vissés à la tige filetée 66 pour maintenir la position de chaque élément résistif 46 par rapport au bloc électromécanique 44.

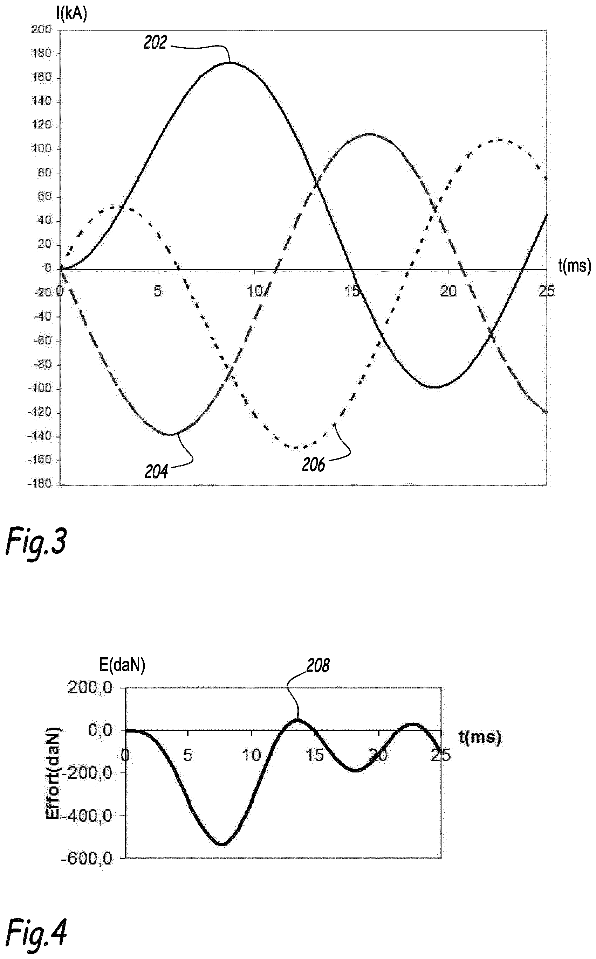

A la figure 3, une première 202, une deuxième 204, et une troisième 206 courbes représentent le courant, en valeur crête, circulant respectivement dans chacun des trois conducteurs électriques 12 pour les éléments résistifs 46 qui ont une impédance égale à 0,6 mΩ, et lorsque le bloc électromécanique 44 passe de sa position de repos à sa position de court-circuit. Les première 202, deuxième 204 et troisième 206 courbes présentées sont obtenues pour un courant triphasé délivré par le transformateur 20 aux conducteurs électriques 12 dont la valeur efficace est égale à 100 kA, suite au déplacement du bloc électromécanique 44 dans sa position de court-circuit et pour une tension entre les conducteurs électrique 12 dont la valeur est égale à 415V avant déplacement du bloc électromécanique 44 dans sa position de court-circuit.

De manière connue, dans le cas où le courant circulant dans les conducteurs électriques 12 est un courant alternatif, lors du passage du bloc électromécanique 44 dans sa position de court-circuit, la valeur du courant est égale à :

$$I(t) = I\,(\sin(\omega t+\alpha-\varphi) - \sin(\alpha-\varphi).e^{-(R/L)^*t}),$$

avec φ représentant le déphasage entre le courant et la tension pour chaque conducteur électrique 12, exprimé en radian (rad),

α représentant l'angle d'enclenchement exprimé en radian, c'est-à-dire l'angle mesuré par rapport à la tension circulant sur le conducteur correspondant, pour lequel le bloc électromécanique 44 passe en position de court-circuit,

ω représentant la fréquence angulaire en rad/seconde (rad/s),

t représentant le temps en seconde et

I représentant la valeur efficace du courant en Ampères.

Ainsi, le courant présente une composante sinusoïdale de régime permanent $I^*\sin(\omega t+\alpha-\varphi)$ et une composante apériodique de régime transitoire $I^*\sin(\alpha-\varphi).e^{-(R/L)^*t}$. La composante apériodique décroit lorsque le temps t augmente et a donc une amplitude maximale pendant, par exemple, les vingt premières millisecondes faisant suite au passage du bloc électromécanique 44 en position de court-circuit.

La première courbe 202 présente une amplitude maximale plus importante que les deuxième 204 et troisième 206 courbes. La première courbe 202 est fortement asymétrique, c'est-à-dire qu'elle est non sinusoïdale. Ceci est dû à la composante apériodique non nulle et qui présente une amplitude importante, pendant au moins les vingt premières millisecondes faisant suite au passage du bloc électromécanique 44 en position de court-circuit. Pour les deuxième 204 et troisième 206 courbes, la composante asymétrique du courant a une amplitude inférieure à celle de la composante asymétrique du courant de la première courbe 202.

La valeur élevée de l'amplitude du courant, globalement supérieure à 100 kA crête, circulant dans les conducteurs électriques 12, engendre des efforts importants entre les conducteurs électriques 12, comme représenté à la figure 4. En effet, la figure 4 montre sur une quatrième courbe 208 un premier effort latéral E1, exprimé en décaNewton (daN), s'appliquant au conducteur électrique 12 à travers lequel circule le courant correspondant à la première courbe 202. La quatrième courbe 208 est obtenue pour une longueur des conducteurs électriques 12 égale à 200 mm et une distance entre chaque conducteur électrique 12 consécutif, mesurée suivant l'axe transversal Y, égale à 70 mm. Le premier effort latéral E1 mesuré est maximal au moment où l'intensité du courant circulant dans ledit conducteur électrique 12 est maximale, c'est-à-dire pour un temps t de l'ordre de 8 ms. Plus généralement, les courants circulant dans chaque conducteur électrique 12 influent sur le premier effort latéral E1 subi par le conducteur électrique 12 à travers lequel circule le courant correspondant à la première courbe 202.

Les observations faites pour le premier effort latéral E1 sont également valables pour des efforts latéraux s'appliquant sur les autres conducteurs électriques 12. Ainsi, plus l'amplitude du courant circulant dans les conducteurs électriques 12 est élevée, plus les efforts subis par l'installation 10 et appliqués entre les conducteurs électriques 12 sont importants.

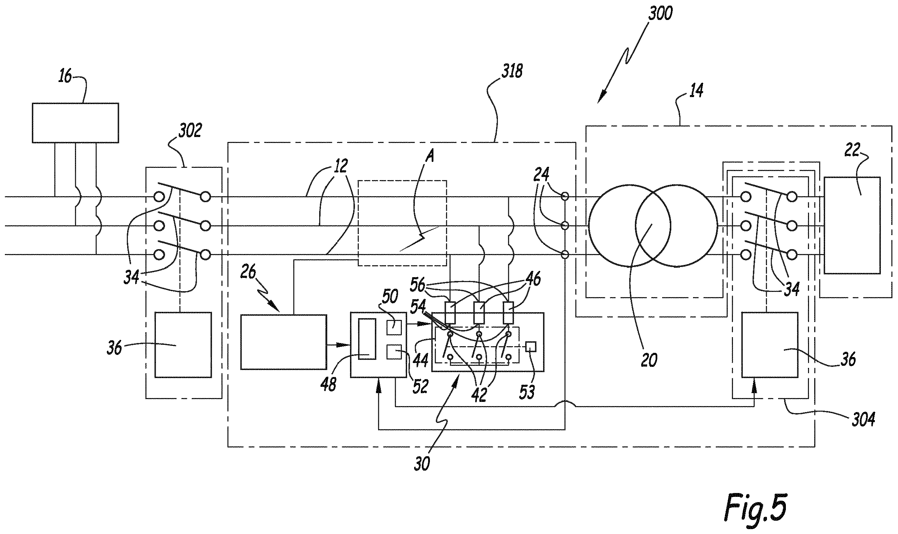

La figure 5 correspond à un deuxième mode de réalisation de l'invention pour lequel les éléments similaires à ceux du premier mode de réalisation comportent les mêmes références, et ne sont pas décrits à nouveau.

Sur la figure 5, une installation 300 comprend un premier disjoncteur triphasé 302 et un deuxième disjoncteur triphasé 304 similaires au disjoncteur triphasé 28. Le premier disjoncteur triphasé 302 est connecté en aval du dispositif de court-circuitage 30 par rapport au réseau électrique 22 situé en amont, et le deuxième disjoncteur 304 est connecté en amont du dispositif de court-circuitage 30. Plus précisément, le deuxième disjoncteur 304 est positionné entre le transformateur électrique 20 et le réseau électrique 22.

Ainsi, l'installation 300 comprend un système d'extinction d'un arc électrique 318 et des conducteurs électriques 12 connectés au transformateur 20.

Le système d'extinction 318 comprend le deuxième disjoncteur triphasé 304. Le deuxième disjoncteur 304 est généralement disposé du côté moyenne tension, tandis que le premier disjoncteur 302 est disposé du côté basse tension.

L'organe de déclenchement 52 est propre à déclencher l'ouverture du deuxième disjoncteur 304 lorsque le logiciel de détection 48 détecte l'apparition de l'arc électrique A. Le fonctionnement du deuxième mode de réalisation est similaire à celui du premier mode de réalisation, mis à part que dans le premier mode de réalisation, le disjoncteur 28 ouvre ses interrupteurs 34, qui sont disposés du côté basse tension, tandis que dans le deuxième mode de réalisation, le deuxième disjoncteur 304 ouvre ses interrupteurs 34, qui sont disposés du côté moyenne tension. En outre, selon le deuxième mode de réalisation, les capteurs de courant 24 sont positionnés en aval du deuxième disjoncteur triphasé 304.

Le temps de déplacement du deuxième disjoncteur 304 vers sa position ouverte, suite à la détection de l'arc électrique A par le logiciel de détection 48, est généralement de l'ordre de 100 ms. Ainsi, le temps d'élimination du court-circuit créé par le dispositif de court-circuitage 30 est de l'ordre de 100 ms pour l'installation 300.

La forme des courants circulant dans les conducteurs électriques 12 est identique pour les premier et deuxième modes de réalisation de l'invention.

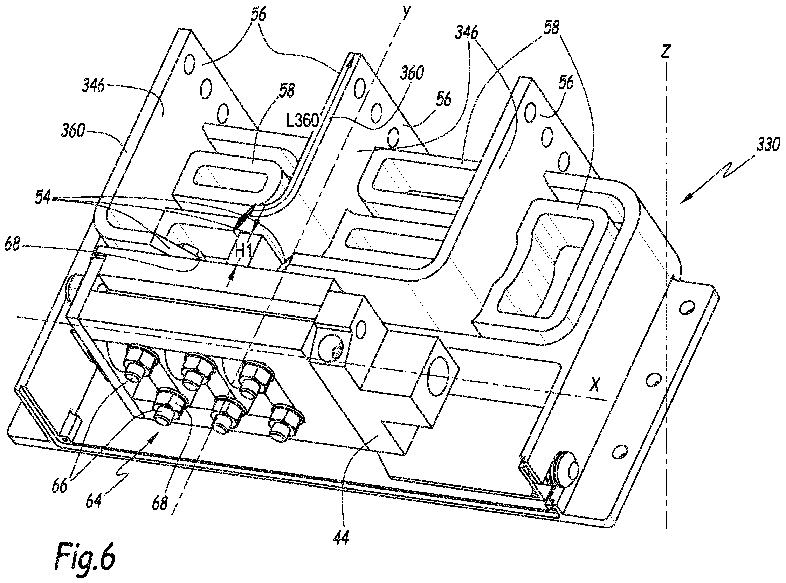

A la figure 6, un dispositif de court-circuitage 330 est représenté. Le dispositif de court-circuitage 330 est similaire au dispositif de court-circuitage 30 selon le premier mode de réalisation, à la différence qu'il comprend des éléments résistifs 346 ayant, selon un plan parallèle à l'axe longitudinal X et à l'axe transversal Y, une forme globalement en L en s'étendant depuis sa première extrémité de connexion 54 vers sa deuxième extrémité de connexion 56. Les éléments résistifs 346 sont en un matériau tel que de l'inox.

Chaque élément résistif 346 présente une longueur curviligne L360, mesurée le long d'une arête 360 reliant sensiblement la première extrémité de connexion 54 à la deuxième extrémité de connexion 56, supérieure à 200 mm. Chaque élément résistif 346 présente également, perpendiculairement à l'arête 360, une section supérieure ou égale à 400 mm$^2$.

Plus généralement, les dimensions des éléments résistifs 346 et le matériau constituant les éléments résistifs 346 sont tels que chaque élément résistif 346 présente une impédance dont la valeur est comprise entre 0,3 mΩ et 1 mΩ, de préférence comprise entre 0,5 mΩ et 0,6 mΩ, pour une température de l'élément résistif 346 comprise entre 0°C et 100°C.

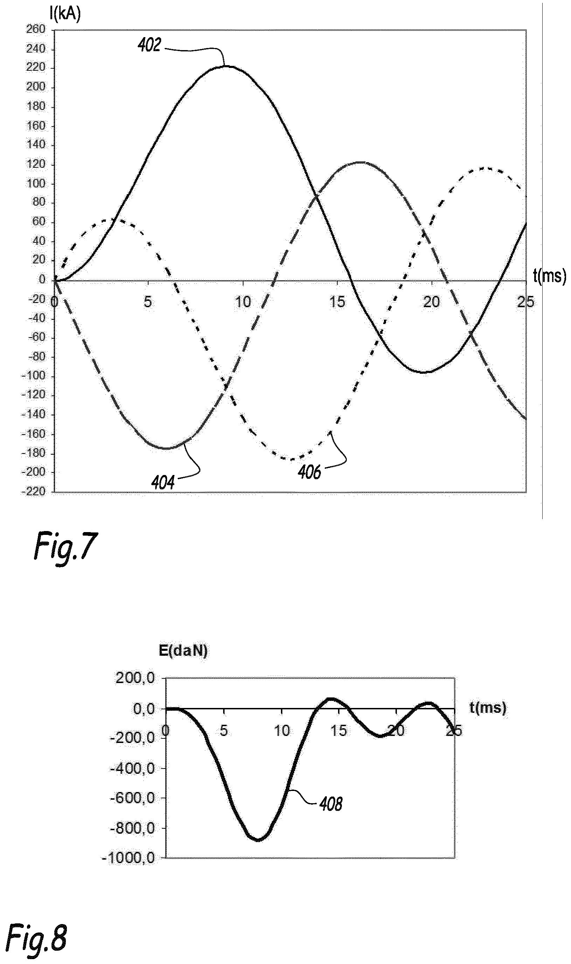

A la figure 7, des cinquième 402, sixième 404 et septième 406 courbes correspondent au courant, en valeur crête, circulant respectivement dans chacune des trois conducteurs électriques, lorsqu'un court-circuit est établi entre les conducteurs électriques par un système d'extinction d'un arc électrique de l'état de la technique, c'est-à-dire sans éléments résistifs 46, 346. Les cinquième 402, sixième 404 et septième 406 courbes sont obtenus dans des conditions équivalentes à celles choisies pour les première 202, deuxième 204 et troisième 206 courbes. En comparaison avec les première 202, deuxième 204 et troisième 206 courbes, il apparaît que la valeur crête du courant est plus élevée pour les cinquième 402, sixième 404 et septième 406 courbes.

A la figure 8, une huitième courbe 408 montre un deuxième effort latéral E2 subi par le conducteur électrique à travers lequel circule le courant correspondant à la cinquième courbe 402. Il apparaît que le deuxième effort latéral E2 est plus important que le premier effort latéral E1. En effet, l'amplitude des courants visible sur les cinquième 402, sixième 404 et septième 406 courbes étant plus élevée que celle visible sur les première 202, deuxième 204 et troisième 206 courbes, cela engendre des efforts plus importants sur les conducteurs électrique dans le cadre d'un système d'extinction de l'état de la technique par rapport aux systèmes d'extinction 18, 318 conformes aux premier, deuxième et troisième modes de réalisation.

Grâce à l'invention, un effort maximal appliqué sur le conducteur électrique 12 à travers lequel circule le courant correspondant à la première courbe 202 est diminué globalement d'environ 40%. Le système d'extinction 18 permet donc de réduire fortement les efforts exercés sur les conducteurs électriques 12 lors du passage du bloc électromécanique 44 dans sa position de court-circuit. En effet les éléments résistifs 46, 346 permettent de réduire l'amplitude de la composante apériodique du courant pour chaque conducteur électrique 12, en modifiant la résistance globale de l'installation 10, 300, afin de modifier le déphasage entre le courant et la tension circulant sur chaque conducteur électrique 12. La modification du déphasage permet de réduire la valeur du facteur de puissance et de la composante apériodique pour chaque conducteur électrique 12. La composante apériodique a une influence très négative sur l'installation 10, 300 et est propre à augmenter fortement, par exemple à multiplier par 1,5, la valeur crête du courant circulant sur le conducteur électrique 12 correspondant.

Le dispositif de court-circuitage 30, 330 permet de diminuer la composante apériodique de régime transitoire, et donc la valeur crête du courant en régime transitoire circulant sur le conducteur électrique 12 correspondant, afin de réduire les efforts subis par l'installation électrique 10, 300 et plus précisément par les conducteurs électriques 12. Cette diminution de la composante apériodique et cette réduction des efforts sont obtenues sans augmenter de manière significative le temps de commutation de l'arc électrique A. Le temps de commutation correspondant au temps nécessaire pour que l'arc électrique A, qui apparaît entre les conducteurs électriques 12, traverse le dispositif de court-circuitage 30, 330.

En effet, le temps de commutation de l'arc est de préférence compris entre 0,1 ms et 2 ms.

Par ailleurs, le volume important des éléments résistifs 46, 346 permet de limiter la température des éléments résistifs à une valeur inférieure à 500°C pour un courant les traversant égal à 100 kA pendant 50 ms.

Finalement, grâce au système d'extinction 18, 318 selon l'invention, les efforts subis par l'installation 300 sont limités pendant la période transitoire, puis après un temps de réponse prédéterminé, le disjoncteur isole électriquement la source d'alimentation 14, et plus généralement le réseau électrique 22 des conducteurs électriques 12.

Les éléments résistifs 46, 346 permettent de diminuer le facteur de puissance de l'installation 10, de diminuer la valeur crête du courant mais également sa valeur moyenne, de limiter l'échauffement dans l'installation 10 et de ne pas gêner l'extinction de l'arc électrique par commutation dans le dispositif de court-circuitage 30, 330. La commutation correspond au passage de l'arc électrique à travers le dispositif de court-circuitage 30.

La tension entre les conducteurs électriques 12 est généralement inférieure à 690 V, lorsque le bloc électromécanique 44 est dans sa position de repos.

En variante, l'installation électrique 10 est une installation monophasée ou biphasée comprenant respectivement un conducteur de phase et un conducteur de neutre ou deux conducteurs de phase.

Selon une autre variante, le courant circulant dans les conducteurs électriques 12 est un courant continu et la tension délivrée sur les conducteurs électriques 12 est inférieure à 400V.

**Revendications**

1.    Dispositif (30 ; 330) de court-circuitage d'une installation électrique (10 ; 300) comportant au moins deux conducteurs électriques (12), le dispositif comprenant :

- au moins deux bornes de connexion (42), chacune étant propre à être reliée à un conducteur électrique (12) respectif,
- un bloc électromécanique (44) propre à établir un court-circuit entre les bornes de connexion (42),
- au moins un élément résistif (46 ; 346) propre à connecter l'une des bornes de connexion (42) au conducteur électrique (12) correspondant, le ou chaque élément résistif (46 ; 346) comprenant une première extrémité de connexion (54) connectée à la borne de connexion (42) correspondante et une deuxième extrémité de connexion (56) propre à être connectée au conducteur électrique correspondant,
**caractérisé en ce que** l'élément résistif (46 ; 346) présente une impédance, et la variation de la valeur de l'impédance est inférieure à 1 mΩ pour une température de l'élément résistif comprise entre 0°C et 200°C.

2.  Dispositif selon la revendication 1, **caractérisé en ce que** la valeur de l'impédance de l'élément résistif (46 ; 346) est comprise entre 0,3 mΩ et 1 mΩ, de préférence entre 0,5 mΩ et 0,6 mΩ, pour une température de l'élément résistif comprise entre 0°C et 100°C.

3.  Dispositif selon l'une des revendications précédentes, **caractérisé en ce que** le bloc électromécanique (44) comprend un organe mobile (53) propre à commuter entre une position de repos dans laquelle les bornes de connexion (42) sont électriquement isolées les unes des autres, et une position de court-circuit dans laquelle les bornes de connexion (42) sont connectées entre elles.

4.  Dispositif selon l'une des revendications précédentes, **caractérisé en ce qu'**il comprend plusieurs éléments résistifs (46 ; 346), chaque borne de connexion (42) étant connectée à la première extrémité de connexion (54) d'un élément résistif (46 ; 346) respectif, et **en ce que** les éléments résistifs (46 ; 346) sont isolés électriquement les uns des autres.

5.  Dispositif selon l'une des revendications précédentes, **caractérisé en ce que** le ou chaque élément résistif (46 ; 346) est en inox.

6.  Dispositif selon l'une des revendications précédentes, **caractérisé en ce que** le ou chaque élément résistif (46 ; 346) comprend une arête (60 ; 360) reliant la première extrémité de connexion (54) et la deuxième extrémité de connexion (56), et **en ce que** le ou chaque élément résistif (46 ; 346) présente une section, perpendiculairement à l'arête (60 ; 360) correspondante, supérieure ou égale à 400 mm².

7.  Dispositif selon l'une des revendications précédentes, **caractérisé en ce qu'**au moins une borne de connexion (42) est décalée d'une hauteur de surélévation (H1) par rapport à l'autre ou aux autres bornes de connexion (42), la hauteur de surélévation (H1) étant comprise entre 2 cm et 4 cm.

8.  Dispositif selon l'une des revendications précédentes, **caractérisé en ce que** le ou chaque élément résistif (46 ; 346) est en forme de boustrophédon.

9.  Système d'extinction (18 ; 318) d'un arc électrique (A) susceptible d'apparaître dans une installation électrique (10 ; 300), l'installation comprenant au moins deux conducteurs électriques (12), le système comprenant :

    - au moins un appareil de détection (24, 26, 48) de l'arc électrique (A) sur chaque conducteur (12),
    - au moins un disjoncteur (28 ; 304) d'isolation électrique connecté aux conducteurs électriques (12) entre l'installation électrique (10 ; 300) et une source d'alimentation (14) de cette installation électrique,
    - un dispositif de court-circuitage (30 ; 330) connecté aux conducteurs électriques (12),
    - une unité électronique de commande (32, 50) du dispositif de court-circuitage (18; 318), propre à commander le dispositif de court-circuitage (18; 318) dans un état d'établissement d'un court-circuit entre les conducteurs électriques (12) lorsque l'arc électrique (A) est détecté par l'appareil de détection et
    - un organe de déclenchement (32, 52) du ou des disjoncteurs électriques (28 ; 304) lorsque l'arc électrique est détecté par l'appareil de détection (24, 26, 48),
    **caractérisé en ce que** le dispositif de court-circuitage (30 ; 330) est conforme à l'une des revendications précédentes.

10. Système selon la revendication 9, **caractérisé en ce que** le dispositif de court-circuitage (30 ; 330) est positionné en aval du ou des disjoncteurs (28 ; 304) d'isolation électrique par rapport à la source d'alimentation électrique (14).

**Patentansprüche**

1.  Vorrichtung (30; 330) zum Kurzschließen einer elektrischen Anlage (10; 300), die mindestens zwei elektrische Leitungen (12) aufweist, wobei die Vorrichtung umfasst:

    - mindestens zwei Verbindungsanschlüsse (42), die jeweils geeignet sind, an eine jeweilige elektrische Leitung (12) angeschlossen zu werden,
    - mindestens einen elektromechanischen Block (44), der geeignet ist, einen Kurzschlusskreis zwischen den Verbindungsanschlüssen (42) herzustellen,
    - mindestens ein Widerstandselement (46; 346), das geeignet ist, einen der Verbindungsanschlüsse (42) mit einer entsprechenden elektrischen Leitung (12) zu verbinden, wobei das oder jedes Widerstandselement (46; 346) ein erstes an den entsprechenden Verbindungsanschluss (42) angeschlossenes Verbindungsende (54) und ein zweites Verbindungsende (56), das geeignet ist, mit einer entsprechenden elektrischen Leitung verbunden zu werden, umfasst, **dadurch gekennzeichnet, dass** das Widerstandselement (46; 346) eine Impedanz aufweist und die Änderung des Wertes der Impedanz für eine Temperatur des Widerstandselementes zwischen 0°C und 200°C kleiner ist als 1 mΩ.

2. Vorrichtung nach Anspruch 1, **dadurch gekennzeichnet, dass** der Wert der Impedanz des Widerstandselementes (46; 346) für eine Temperatur des Widerstandselementes zwischen 0°C und 100°C zwischen 0,3 mΩ und 1 mΩ, vorzugsweise zwischen 0,5 mΩ und 0,6 mΩ liegt.

3. Vorrichtung nach einem der vorhergehenden Ansprüche, **dadurch gekennzeichnet, dass** der elektromechanische Block (44) ein bewegliches Element (53) umfasst, das geeignet ist, zwischen einer Ruhestellung, in der die Verbindungsanschlüsse (42) elektrisch voneinander isoliert sind, und einer Kurzschlussstellung, in der die Verbindungsanschlüsse (42) miteinander verbunden sind, beweglich ist.

4. Vorrichtung nach einem der vorhergehenden Ansprüche, **dadurch gekennzeichnet, dass** sie mehrere Widerstandselemente (46; 346) aufweist, wobei jeder Verbindungsanschluss (42) an das erste Verbindungsende (54) eines jeweiligen Widerstandselementes (46; 346) angeschlossen ist, und dass die Widerstandselemente (46; 346) voneinander elektrisch isoliert sind.

5. Vorrichtung nach einem der vorhergehenden Ansprüche, **dadurch gekennzeichnet, dass** das oder jedes Widerstandselement (46; 346) aus Edelstahl hergestellt ist.

6. Vorrichtung nach einem der vorhergehenden Ansprüche, **dadurch gekennzeichnet, dass** das oder jedes Widerstandselement (46; 346) einen Steg (60; 360) umfasst, der das erste Verbindungsende (54) und das zweite Verbindungsende (56) verbindet, und dass das oder jedes Widerstandselement (46; 346) einen Querschnitt senkrecht zum entsprechenden Steg (60; 360) größer als oder gleich 400 mm$^2$ aufweist.

7. Vorrichtung nach einem der vorhergehenden Ansprüche, **dadurch gekennzeichnet, dass** mindestens ein Verbindungsanschluss (42) um eine Überhanghöhe (H1) in Bezug auf den oder die anderen Verbindungsanschlüsse (42) versetzt ist, wobei die Überhanghöhe (H1) zwischen 2 cm und 4 cm liegt.

8. Vorrichtung nach einem der vorhergehenden Ansprüche, **dadurch gekennzeichnet, dass** das oder jedes Widerstandselement (46; 346) die Form eines Bustrophedons aufweist.

9. Löschsystem (18; 318) eines Lichtbogens (A), der dazu neigt, in einer elektrischen Anlage (10; 300) zu erscheinen, wobei die Anlage mindestens zwei elektrische Leitungen (12) umfasst, wobei das System umfasst:

- mindestens eine Vorrichtung (24, 26, 48) zum Detektieren des Lichtbogens (A) auf jeder Leitung (12),
-- mindestens einen Unterbrecher (28; 304) der elektrischen Isolation, der mit den elektrischen Leitungen (12) zwischen der elektrischen Anlage (10; 300) und einer Versorgungsquelle (14) dieser elektrischen Anlage verbunden ist,
- eine Kurzschlussvorrichtung (30; 330), die an die elektrischen Leitungen (12) angeschlossen ist,
- eine elektronische Steuereinheit (32, 50) der Kurzschlussvorrichtung (18; 318), die geeignet ist, die Kurzschlussvorrichtung (18; 318) in einen Zustand des Herstellens eines Kurzschlusses zwischen den elektrischen Leitungen (12), wenn der Lichtbogen (A) von der Detektionsvorrichtung erfasst wird, zu steuern und
- einen Auslöseelement (32, 52) des oder der elektrischen Unterbrecher (28; 304), wenn der Lichtbogen von der Detektionsvorrichtung (24, 26, 48) detektiert wird,
**dadurch gekennzeichnet, dass** die Kurzschlussvorrichtung (30; 330) nach einem der vorhergehenden Ansprüche ausgebildet ist.

10. System nach Anspruch 9, **dadurch gekennzeichnet, dass** die Kurzschlussvorrichtung (30; 330) dem oder den Unterbrecher (28; 304) der elektrischen Isolation in Bezug auf die elektrische Versorgungsquelle (14) nachgeschaltet angeordnet ist.

## Claims

1. Device (30; 330) for short-circuiting an electrical installation (10; 300) comprising at least two electrical conductors (12), the device comprising:

- at least two connection terminals (42), each being capable of being connected to a respective electrical conductor (12),
- an electromechanical unit (44) capable of establishing a short-circuit between the connection terminals (42),
- at least one resistance element (46; 346) capable of connecting one of the connection terminals (42) to the corresponding electrical conductor (12), the or each resistance element (46; 346) comprising a first connection end (54) connected to the corresponding connection terminal (42) and a second connection end (56) capable of being connected to the corresponding electrical conductor,
**characterised in that** the resistance element (46; 346) has an impedance, and the variation of the impedance value is less than 1 mΩ for a temperature of the resistance element of between 0°C and 200°C.

2. Device according to claim 1, **characterised in that** the impedance value of the resistance element (46; 346) is between 0.3 mΩ and 1 mΩ, preferably between 0.5 mΩ and 0.6 mΩ, for a temperature of the resistance element of between 0°C and 100°C.

3. Device according to any one of the preceding claims, **characterised in that** the electromechanical unit (44) comprises a movable member (53) capable of switching between a rest position, in which the connection terminals (42) are electrically isolated from one another, and a short-circuit position, in which the connection terminals (42) are connected together.

4. Device according to any one of the preceding claims, **characterised in that** it comprises a plurality of resistance elements (46; 346), each connection terminal (42) being connected to the first connection end (54) of a respective resistance element (46; 346), and **in that** the resistance elements (46; 346) are electrically isolated from one another.

5. Device according to any one of the preceding claims, **characterised in that** the or each resistance element (46; 346) is made of stainless steel.

6. Device according to any one of the preceding claims, **characterised in that** the or each resistance element (46; 346) comprises an edge (60; 360) connecting the first connection end (54) and the second connection end (56), and **in that** the or each resistance element (46; 346) has a cross-section, perpendicularly to the corresponding edge (60; 360), greater than or equal to 400 mm$^2$.

7. Device according to any one of the preceding claims, **characterised in that** at least one connection terminal (42) is offset by an extra height (H1) relative to the other connection terminal(s) (42), the extra height (H1) being between 2 cm and 4 cm.

8. Device according to any one of the preceding claims, **characterised in that** the or each resistance element (46; 346) is in boustrophedon form.

9. Extinguishing system (18; 318) for extinguishing an electric arc (A) which may appear in an electrical installation (10; 300), the installation comprising at least two electrical conductors (12), the system comprising:

- at least one detection apparatus (24, 26, 48) for detecting the electric arc (A) on each conductor (12),
- at least one electrically isolating circuit breaker (28; 304) connected to the electrical conductors (12) between the electrical installation (10; 300) and a power supply source (14) of the electrical installation,
- a short-circuiting device (30; 330) connected to the electrical conductors (12),
- an electronic control unit (32, 50) for the short-circuiting device (18; 318), capable of controlling the short-circuiting device (18; 318) to enter a state for establishing a short-circuit between the electrical conductors (12) when the electric arc (A) is detected by the detection apparatus, and
- a triggering member (32, 52) for triggering the electric circuit breaker(s) (28; 304) when the electric arc is detected by the detection apparatus (24, 26, 48),
**characterised in that** the short-circuiting device (30; 330) is in accordance with any one of the preceding claims.

10. System according to claim 9, **characterised in that** the short-circuiting device (30; 330) is positioned downstream of the electrically isolating circuit breakers (28; 304) relative to the power supply source (14).

Fig.1

Fig.2

Fig.3

Fig.4

Fig.5

Fig.6

Fig.7

Fig.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 10931647 A
- US 6538554 B1
- EP 0575932 A1
- FR 2980301 A1